# FASCICULE DE BREVET EUROPEEN

(11) **EP 3 134 640 B1**
(45) Date de publication et mention de la délivrance du brevet: **24.01.2024**
(21) Numéro de dépôt: 15718540.6
(22) Date de dépôt: 02.04.2015
(51) Int. Cl.: F02N 11/08, F01M 5/02

(54) **GESTION DU RECHAUFFAGE D'UN MOTEUR A COMBUSTION DE VEHICULE AUTOMOBILE**
HEIZUNGSMANAGEMENT EINER VERBRENNUNGSMASCHINE EINES KRAFTFAHRZEUGS
HEATING MANAGEMENT OF A COMBUSTION ENGINE OF A MOTOR VEHICLE

(30) Priorité: 24.04.2014 FR 1453681
(43) Date de publication de la demande: 01.03.2017
(73) Titulaire: Renault s.a.s, 92100 Boulogne Billancourt (FR)
(72) Inventeur: MONTHEL, Nicolas, 78000 Versailles (FR)
(74) Mandataire: Renault Group
(86) Numéro de dépôt international: PCT/FR2015/050857
(87) Numéro de publication internationale: WO 2015/162351

(56) Documents cités:
- WO-A1-01/94778
- US-A- 3 308 305
- US-A- 4 563 987
- US-A1- 2009 312 894

## Description

L'invention concerne le réchauffage d'un moteur à combustion de véhicule automobile.

Lorsqu'un véhicule automobile a son moteur de traction ou de propulsion éteint et que la température extérieure est relativement froide, par exemple inférieure à -30°C, l'huile du moteur est susceptible de figer, empêchant ainsi le redémarrage ultérieur du moteur.

Le propriétaire du véhicule peut bien sûr décider de laisser le moteur tourner, par exemple toute une nuit, ou bien encore de venir régulièrement, par exemple toutes les deux ou trois heures, faire tourner le moteur pendant quelques minutes.

Sur certains véhicules, il est possible à l'utilisateur de programmer un démarrage, dit de secours, afin d'éviter le figeage de l'huile du moteur.

Lors de cette programmation, des données de programmation de réchauffage moteur sont stockées dans une mémoire du véhicule automobile. Ces données peuvent par exemple comprendre une heure de début de mission, et une valeur de variable indiquant qu'une stratégie de réchauffage de secours doit être mise en place jusqu'à cette heure de début de mission. Par exemple, toutes les deux heures, le moteur du véhicule automobile démarre automatiquement pendant une durée prédéterminée, par exemple pendant dix minutes. Ces redémarrages réguliers permettent de maintenir le moteur suffisamment chaud pour que l'huile du moteur reste liquide.

Néanmoins, ces démarrages successifs du moteur à combustion s'accompagnent d'émissions de gaz toxiques. Si le véhicule est arrêté dans un lieu confiné, il existe un risque d'intoxication d'éventuelles personnes proches du véhicule, par exemple des personnes dormant dans un véhicule garé dans un garage fermé.

Afin de limiter ce risque, le système de gestion du réchauffage du véhicule est conçu de façon à imposer une reprogrammation toutes les 24 heures. En outre, si après avoir programmé un démarrage de secours, l'utilisateur décide d'utiliser son véhicule pour se déplacer ou passer une vitesse, les données programmées sont effacées.

Néanmoins, il reste possible que les utilisateurs programment un réchauffage de secours alors que le véhicule est arrêté dans un lieu confiné comme un garage.

Il a été envisagé d'installer un capteur de toxicité apte à mesurer une concentration de monoxyde de carbone et/ou de dioxyde de carbone dans l'air, et de programmer le système afin d'interdire les démarrages du moteur dès que le ou les taux mesuré(s) dépassent un ou des seuil(s). Néanmoins, cette interdiction risque d'intervenir relativement tard, et le risque d'intoxication reste relativement élevé.

Il a été également envisagé d'installer un dispositif pour mesurer l'espace libre entre le véhicule et les éventuelles parois, et de programmer un processeur de façon à interdire un réchauffage si des parois proches sont détectées sur les quatre côtés du véhicule.

Il existe un besoin pour une gestion du réchauffage moteur permettant de concilier simplicité et sécurité.

Il est proposé un procédé de gestion du réchauffage d'un moteur à combustion de véhicule automobile en vue de la prévention du figeage de l'huile de ce moteur, comprenant les étapes suivantes :
- stocker dans une mémoire des données de programmation de réchauffage moteur,
- si ces données correspondent à une série d'ordres de démarrage du moteur à une série d'heures de démarrages respectives comprises dans une plage de durée donnée, pour au moins une (et avantageusement chaque) heure de démarrage de cette série, lorsque l'heure courante atteint l'heure de démarrage, recevoir une valeur de température courante mesurée, et si la valeur de température reçue est inférieure à un seuil, autoriser le démarrage, et si la valeur de température reçue est supérieure à ce seuil, interdire le démarrage.

La plage comprenant la série d'heures de démarrage peut avantageusement avoir une durée inférieure ou égale à 12 heures. La plage comprenant la série d'heures de démarrage peut avantageusement avoir une durée supérieure ou égale à 1 heure. Cette plage peut ainsi couvrir au moins une partie de la nuit, par exemple débuter à 20 heures et se terminer à 8 heures le lendemain matin.

La série d'heures de démarrage comprend plusieurs heures de démarrage, par exemple entre 3 et 10 heures de démarrage. Les données de programmation peuvent correspondre en outre à des heures de démarrage supplémentaires, avant ou après cette plage, par exemple dès 18 heures et/ou jusqu'à 10 heures le lendemain matin.

Les ordres de démarrage correspondant aux heures de démarrage dans une même plage de durée inférieure ou égale à 12 heures permettent d'assurer un réchauffage de secours, afin que l'huile du moteur ne fige pas.

Grâce au procédé décrit ci-dessus, le démarrage de secours n'est mis en oeuvre que lorsque la température est relativement basse.

On peut en effet supposer que la température dans un logement dans lequel vit un être humain se situe dans une plage attendue, par exemple entre 5° C et 40° C. Ainsi, si la valeur de température mesurée est relativement élevée, par exemple supérieure à -5° C, on peut supposer que le véhicule est dans un lieu confiné et interdire le démarrage. En revanche, si la température mesurée est inférieure à ce seuil, c'est que le véhicule est vraisemblablement à l'extérieur, et que l'huile est susceptible de se figer.

Le procédé décrit ci-dessus peut ainsi permettre de limiter le risque d'intoxication.

En particulier, il pourrait être envisagé de limiter des contraintes relatives à la programmation de la mémoire. Par exemple, on pourrait prévoir de laisser par défaut un programme de redémarrage de secours actif chaque soir, c'est-à-dire que l'utilisateur n'aurait plus besoin de reprogrammer ces démarrages chaque nuit, ou bien après la moindre manipulation du véhicule.

Ce procédé peut en outre permettre de limiter la consommation de carburant, ainsi que la consommation d'énergie stockée dans une batterie du véhicule.

Les données de programmation peuvent comprendre d'autres ordres de démarrage, par exemple à des heures de démarrage en-dehors de la plage de 12 heures considérée.

Les valeurs d'heures de série d'heures de démarrage peuvent être régulièrement espacées (dans le temps) les unes des autres, c'est-à-dire que les ordres de démarrage correspondent à des démarrages potentiels réguliers, par exemple toutes les heures ou toutes les deux heures.

Les données de programmation de réchauffage moteur peuvent avantageusement correspondre à des ordres de démarrage du moteur pendant une durée prédéterminée. Par exemple, ces données peuvent correspondre à des démarrages réguliers, par exemple toutes les deux heures, du moteur pendant une durée prédéterminée de 5, 10 ou bien encore 15 minutes.

On peut prévoir de se placer dans un mode d'attente ou un mode de veille lorsque l'heure courante atteint l'heure de démarrage et que la valeur de température reçue est supérieure au seuil.

Par exemple, il pourra être envisagé d'attendre que l'heure courante atteigne la prochaine heure de démarrage programmée avant de lire une nouvelle valeur de température courante reçue.

Alternativement, on peut prévoir de se placer dans un état d'attente pendant une durée prédéterminée relativement courte, par exemple 3 secondes ou 3 minutes, de recevoir une nouvelle valeur de température mesurée à l'issue de cette attente et d'autoriser le démarrage si la valeur de température mesurée est inférieure au seuil. Dit autrement, le redémarrage est refusé tant que la température est supérieure au seuil. Le démarrage reste susceptible de se produire avant la prochaine heure de démarrage si la température atteint le seuil.

Dans un mode de réalisation, on peut prévoir d'interdire tout redémarrage si la valeur de température mesurée s'avère supérieure au seuil. On pourra par exemple interdire tout redémarrage automatique pendant une durée prédéterminée, par exemple pendant 12 heures, pendant la plage temporelle en cours, ou bien encore tant que l'heure courante reste relativement éloignée d'une heure de début de mission programmée. Le seuil peut alors être choisi relativement élevé, par exemple de l'ordre de 10°C.

On peut éventuellement prévoir de combiner une comparaison à ce seuil élevé, menant à une désactivation des démarrages de secours si la température est supérieure à ce seuil élevé, à une comparaison (si la température est inférieure à ce seuil élevé) à un seuil plus faible, par exemple -5°C, seul le démarrage courant étant interdit si la température est supérieure à ce seuil plus faible.

Alternativement, on pourrait prévoir d'effectuer plusieurs lectures de la valeur des températures courantes reçues et d'autoriser ou non le démarrage en fonction de la dernière valeur lue.

Dans un mode de réalisation avantageux, les données de programmation peuvent comprendre une heure de début de mission.

La plage temporelle incluant la série d'heures de démarrage peut être par exemple fonction de cette heure de début de mission programmée. En particulier, cette plage peut se terminer à l'heure de début de mission, un peu avant, par exemple 20 minutes avant cette heure de début de mission programmée, ou bien encore environ 2 heures avant cette heure de début de mission programmée.

Alternativement, les données de programmation peuvent ne pas comprendre une heure de début de mission. La plage temporelle peut par exemple commencer et se terminer à heures fixes, par exemple 21 heures et 8 heures, respectivement.

Lorsque les données de programmation peuvent comprendre une heure de début de mission, les données de programmation peuvent comprendre des données correspondant à un ordre de démarrage à une heure proche de l'heure de début de mission afin d'adapter la température de l'habitacle. Un tel redémarrage, dit de confort, peut par exemple permettre de réchauffer la température de l'habitacle avant l'arrivée de l'utilisateur.

Avantageusement et de façon non limitative, si l'heure courante est proche de l'heure programmée de début de mission, on peut prévoir d'autoriser le démarrage quelle que soit la valeur de température mesurée. Ce démarrage, effectué une seule fois ou un nombre relativement restreint de fois, par exemple deux fois, peu avant le début de la mission, et à des fins de confort, peut en effet être moins dangereux qu'une série de redémarrages de secours effectués régulièrement pendant une durée relativement longue, par exemple toute la nuit. Aussi, on peut envisager de laisser ce redémarrage dit de confort s'effectuer même si la température est relativement élevée, par exemple supérieure à -5°C.

Avantageusement et de façon non limitative, on peut prévoir une activation d'un mode veille entre deux heures de démarrage de la série. Par exemple, si un démarrage a été effectué, le système peut retourner dans un mode veille lorsque le moteur est coupé, par exemple après dix minutes. Si le démarrage a été interdit, le système peut retourner dans un mode veille suite à cette interdiction.

Le seuil de température en-deçà duquel le redémarrage est autorisé peut par exemple être choisi entre -15°C et 0°C, avantageusement entre -10 °C et -3°C, par exemple -5°C. Le choix de ce seuil peut être effectué en fonction de l'inertie thermique du moteur, et/ou de la température de figeage de l'huile. On pourrait donc choisir un seuil inférieur à -15°C, par exemple égal à -25°C, notamment pour un autre type d'huile, plus onéreux.

Avantageusement et de façon non limitative, la valeur de température reçue peut être une valeur de température mesurée dans le moteur. Cette information de température peut ainsi être relativement précise, de sorte que le risque de figeage d'huile reste relativement limité. Par exemple, on pourra prévoir d'utiliser comme information la température du liquide de refroidissement, par exemple la température d'eau du moteur.

En variante, il pourrait être envisagé d'utiliser une sonde de température extérieure, située par exemple sous le rétroviseur extérieur, ou bien encore un capteur de mesure de la température d'air à l'admission du moteur.

Le données de programmation de réchauffage moteur peuvent être issues d'une interface utilisateur, par exemple un terminal de l'utilisateur, une interface utilisateur dans l'habitacle, ou autre.

On peut par exemple prévoir d'interdire une programmation si la plage comprenant la série d'heures de démarrages est trop éloignée (dans le temps) de la date de programmation, par exemple distante de plus de 24 heures, de plus d'une semaine ou de plus d'un mois. Par exemple, la programmation peut être refusée si la date de début de mission est plus de 24 heures après l'heure courante de programmation.

Alternativement, on pourrait envisager que ces données de programmation de réchauffage moteur soient préprogrammées.

Il est en outre proposé un dispositif de gestion du réchauffage d'un moteur à combustion d'un véhicule automobile, ce dispositif comprenant une mémoire agencée pour stocker des données de programmation de réchauffage moteur. Ce dispositif comprend en outre des moyens de traitement en communication avec la mémoire et agencés pour, si ces données stockées correspondent à une série d'heures de démarrage respectives dans une plage temporelle donnée, par exemple de durée inférieure ou égale à 12 heures, pour au moins une heure de démarrage de cette série, lorsque l'heure courante atteint l'heure de démarrage, recevoir une valeur de température courante mesurée, si la valeur de température est inférieure à un seuil, autoriser le démarrage, et si la valeur de température est supérieure à un seuil, interdire le démarrage.

Ce dispositif peut par exemple comprendre ou être intégré dans un ou plusieurs processeurs, par exemple un microprocesseur, un micro contrôleur ou autre.

La mémoire peut être une mémoire programmable, par exemple une mémoire EEPROM (de l'anglais « Electrically Erasable Read-Only-Mémory »).

Les moyens de traitement peuvent par exemple comprendre un coeur de processeur ou CPU (de l'anglais « Central Processing Unit »), ou autre.

Il est en outre proposé un véhicule automobile comprenant un moteur à combustion et un dispositif de gestion du réchauffage de ce moteur à combustion, tel que décrit ci-dessus.

Il est en outre proposé un produit programme d'ordinateur comprenant des instructions pour effectuer les étapes du procédé décrit ci-dessus, lorsque ces instructions sont exécutées par un processeur. Ce programme peut être stocké sur un support de type disque dur, ou autre, téléchargé, ou autre.

L'invention sera mieux comprise en référence aux figures dans lesquelles :
La figure 1 montre un exemple de véhicule automobile selon un mode de réalisation de l'invention.
La figure 2 est un logigramme d'un exemple de procédé selon un mode de réalisation de l'invention.
La figure 3 montre des chronogrammes et une interface utilisateur illustrant l'application d'un exemple de procédé selon un mode de réalisation de l'invention.

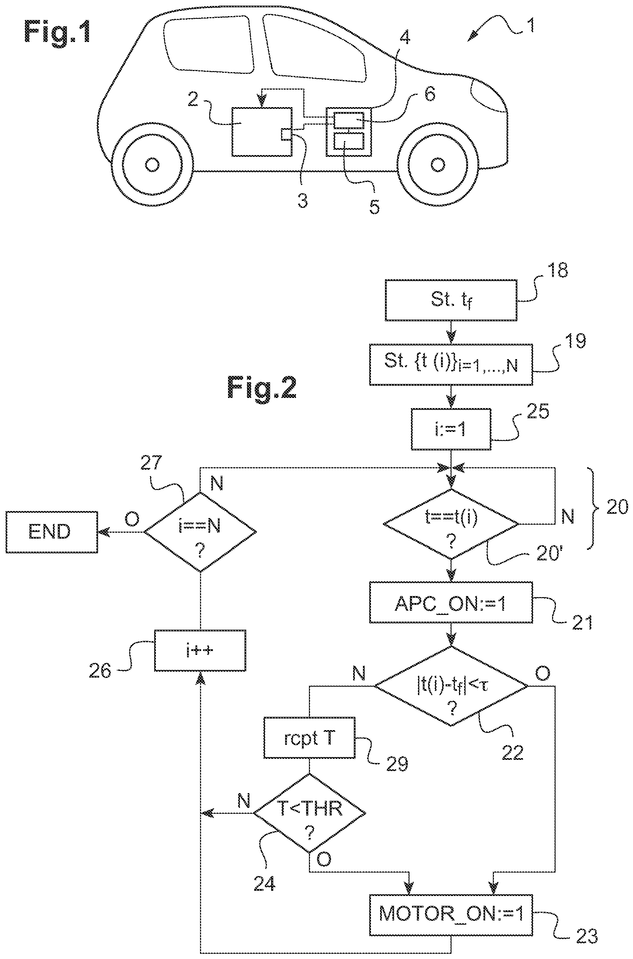

En référence à la figure 1, un véhicule automobile 1 comprend un moteur à combustion interne 2, par exemple un moteur essence, Diesel, ou autre, sur lequel est installé un capteur de température 3, ici un capteur de température d'eau du moteur.

Le véhicule automobile 1 comprend en outre un dispositif de gestion du réchauffage 4, par exemple un processeur.

Ce dispositif comprend une mémoire 5 en communication avec une interface utilisateur non représentée. Cette interface peut par exemple comprendre un écran tactile situé dans l'habitacle. Le dispositif 4 comprend en outre des moyens de traitement 6, par exemple un CPU apte à lire les données stockées dans la mémoire 5.

Le processeur 4 est apte à imposer de manière habituelle un démarrage du moteur lorsque le contact est établi, dans un mode de conduite classique dans lequel le conducteur peut piloter le véhicule à sa guise.

Ce processeur 4 est en outre capable de piloter ce moteur 2 de façon à imposer des démarrages du moteur 2, même en l'absence du conducteur, et en particulier lorsque le contact est coupé.

En particulier, le dispositif 4 peut par exemple comprendre un contrôleur moteur ou ECM (de l'anglais « Engine Control Module »). L'ECM est en communication avec le capteur de température 3 et avec un capteur de température d'air d'admission du moteur (non représenté). L'ECM peut être dans un mode de démarrage clé ou dans un mode de démarrage automatique ou REC (de l'anglais « Removed Engine Start »).

Le contrôleur moteur 4 est ainsi apte à imposer un redémarrage automatique. Dans ce mode de redémarrage automatique, le moteur est limité à un mode ralenti. Le mode de redémarrage peut être désactivé en cas de détection de présence humaine dans le véhicule, par exemple en cas d'ouverture de porte, de changement de vitesse etc., et ce, afin d'éviter les vols.

Le dispositif 4 peut en outre intégrer un contrôleur habitacle ou BCM (de l'anglais « Body Control Module»).

Ce contrôleur habitacle est en communication avec le contrôleur moteur ECM, et en particulier le contrôleur habitacle peut gérer un automate mis en oeuvre lors du mode en redémarrage automatique. Le BCM peut ainsi piloter un démarreur (« starter » en anglais »).

Le BCM peut aussi assurer suite à la programmation un retour client par les clignotants (« flashers » en anglais), par exemple en commandant un allumage des clignotants pendant 3 secondes.

Les demandes clients, que ce soit par la clé ou par une demande via un terminal, comme par exemple un téléphone intelligent ou autre, ou bien encore via une programmation sont prises en compte par le BCM.

En particulier le client peut programmer la mémoire 5, par le biais d'une interface utilisateur, par exemple une interface utilisateur dans l'habitacle ou bien encore un terminal du type téléphone intelligent, ou autre.

On peut prévoir d'assurer un contrôle d'accès à cette programmation. Par exemple, on peut prévoir de n'autoriser cette programmation que si :
- la clé est tournée dans un système de démarrage du véhicule (non représenté) dans une position de démarrage, ou selon le véhicule, si la clé est dans un lecteur ou dans l'habitacle, et/ou
- l'utilisateur a saisi un mot de passe correct.

Ainsi, si le client a programmé la mémoire 5 afin d'imposer des démarrages réguliers du moteur toutes les deux heures en vue d'empêcher un figeage de l'huile, des données de programmation sont stockées dans la mémoire 5, par exemple une série d'heures de démarrage, et une durée de démarrage, par exemple 10 minutes, et/ou autre.

Dans un mode de réalisation avantageux, une fois un certain nombre de redémarrages de secours effectués, les démarrages de secours ultérieurs peuvent être interdits. Ainsi, on vient limiter le nombre maximal de démarrages, par exemple 5 fois par nuit, ou autre.

En référence à la figure 2, suite à des étapes non représentées de réception de données issues de l'interface utilisateur, des données de programmation sont stockées dans la mémoire référencée 5 sur la figure 1, ici une heure de fin de mission t_{f} (étape 18) et une série de valeurs d'heure de démarrage moteur t(i) (étape 19).

Cette série est indicée i, et, dans cet exemple une boucle portant sur cet indice i est mise en place afin de parcourir les différentes valeurs de l'indice i. Des étapes classiques d'initialisation 25, d'incrémentation 26, et de test de sortie de boucle 27 sont ainsi mises en place.

Lors de l'exécution d'une boucle, le système se place dans un état d'attente jusqu'à ce que l'heure courante t atteigne la valeur d'heure t(i) correspondant à cette boucle. Cette attente est référencée 20 sur la figure 2, et dans cet exemple on a représenté un test de comparaison 20' de la valeur courante d'heure t à la valeur t(i) pour cette boucle, mais on comprendra que d'autre étapes peuvent être mises en oeuvre. En particulier, on pourra prévoir de se placer dans un état de veille pendant une durée déterminée.

Lorsque l'heure courante atteint la valeur d'heure de démarrage t(i) programmée dans la mémoire référencée 5 sur la figure 1, le véhicule est réveillé (étape 21 de la figure 2). Par exemple, une variable APC_ON est mise à 1 et un signal est envoyé vers l'ECM afin par de sortir l'ECM d'un état de veille.

L'heure programmée t(i) est comparée au cours d'une étape de test 22 à l'heure de début de mission tε.

Si l'heure t(i) est suffisamment proche de l'heure de début de mission tε, par exemple si la valeur absolue de la différence entre la valeur d'heure programmée t(i) et la valeur d'heure de début de mission tε est inférieure à un seuil τ de par exemple 15 minutes, alors le moteur est allumé et tourne pendant 10 minutes.

Par exemple, une variable MOTOR_ON est mise à un et un signal de commande est envoyé vers le moteur afin d'imposer un démarrage au ralenti pendant 10 minutes. Ceci est représenté par l'étape 23 sur la figure 2.

Si a contrario l'heure t(i) est relativement éloignée de l'heure de début de mission tε, c'est-à-dire que le démarrage sollicité est un démarrage de secours afin d'éviter le figeage de l'huile, alors on reçoit au cours d'une étape 29 une valeur de température T.

Cette valeur de température est comparée à une valeur seuil THR au cours d'une étape 24, par exemple -5°C.

Si la valeur de température T est inférieure à la valeur seuil THR, alors on laisse tourner le moteur au ralenti pendant 10 minutes au cours de l'étape 23 comme lorsqu'un démarrage de confort est effectué peu avant le début de la mission.

A contrario, si la température est supérieure à la valeur seuil, par exemple -5°C, alors on s'abstient de tout redémarrage moteur jusqu'à la prochaine heure de démarrage programmée.

Au bout d'un nombre de redémarrages éventuels N, on prévoit une sortie de boucle. Par exemple, lorsque les étapes 20, 21, 22 ont été effectuées N=5 fois, on peut sortir de cette boucle.

Dans cet exemple, le véhicule se réveille toutes les deux heures, c'est-à-dire que l'heure de démarrage t(i+1) est postérieure de deux heures à l'heure de démarrage t(i).

Ainsi, à chaque boucle sauf celle immédiatement avant l'heure de début de mission programmée par les clients tε, quelques secondes après le réveil du véhicule (étape 21), par exemple 5 secondes, un calculateur vérifie la température d'eau du moteur.

Si cette température est supérieure au seuil de -5°, il est considéré que le véhicule est susceptible d'être à l'intérieur d'un lieu confiné, ou bien que la température extérieure est suffisamment chaude pour que le démarrage de secours puisse être évité sans dommages pour le moteur, et le démarrage programmé est interdit.

Seul le dernier démarrage, de confort, lorsque l'heure courante correspond peu ou prou à l'heure de début de mission tε, est maintenu afin de réchauffer l'habitacle.

Lorsque la température est inférieure au seuil de -5°C, alors il est possible que le véhicule soit à l'extérieur. Le moteur peut alors démarrer de façon à maintenir la température du moteur suffisamment élevée pendant les deux prochaines heures pour que l'huile du moteur ne gèle pas.

Dans un mode de réalisation alternatif, on pourrait prévoir de conditionner le démarrage de confort, lorsque l'heure courante est proche de l'heure de début de mission, au résultat d'un test de comparaison de la valeur de température reçue à un seuil.

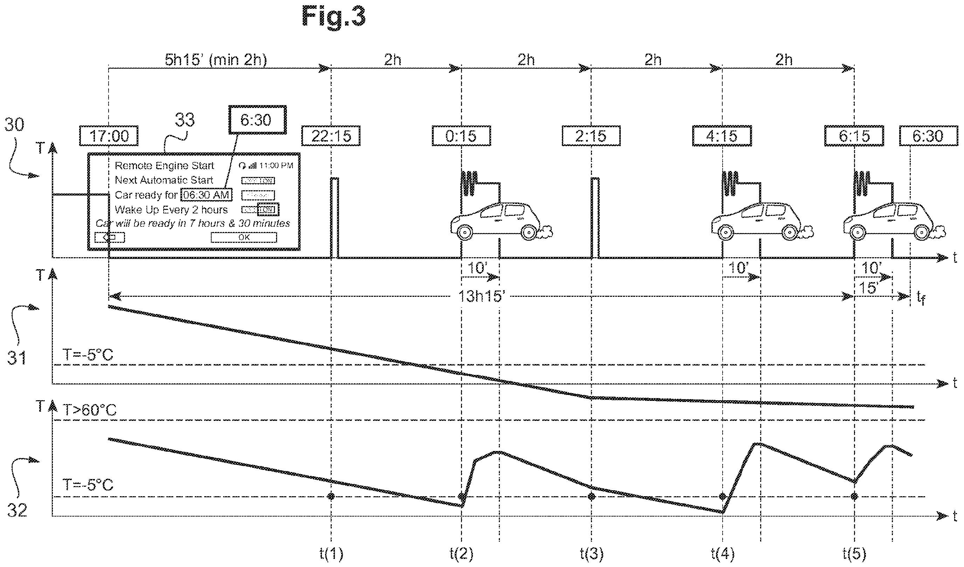

La figure 3 illustre un exemple d'application d'un procédé selon un mode de réalisation de l'invention, au cours d'une nuit. Le graphique 31 montre l'évolution de la température extérieure en fonction du temps. Le graphique 32 montre l'évolution de la température du moteur en fonction du temps, et le graphique 30 représente l'évolution un signal d'activation de l'ECM en fonction du temps. La référence 33 montre un exemple d'affichage écran lors de la programmation.

Lors de la programmation, l'utilisateur active un mode de réveil automatique, saisit une heure de début de mission tε, ici 6h30 et requière des réveils toutes les deux heures afin d'éviter le figeage de l'huile.

Le système calcule alors une valeur d'heure de démarrage de confort, décalée de 15 minutes par rapport à l'heure de début de mission tε, soit t(5) = 6h15, puis une série d'heures de démarrage de secours, décalées les unes les autres de deux heures, la dernière valeur t(4) étant décalée de deux heures via-à vis de la valeur t(5).

Dans cet exemple, la température extérieure diminue au cours du temps, et passe en deçà de -30°C, c'est-à-dire que si aucun réchauffage n'est effectué et que le véhicule reste à l'extérieur, l'huile devrait figer.

Lorsque l'heure courante atteint la valeur t(1), ici 22h15, l'ECM est réveillé. Une valeur de température moteur est reçue et comparée à un seuil de -5°C. Comme à 22h15 la température du moteur est encore supérieure à -5°C, le démarrage du moteur est interdit et l'ECM retourne dans un état de veille.

Lorsque l'heure courante atteint la valeur t(2), ici 0h15, l'ECM est réveillé. Une valeur de température moteur est reçue et comparée à un seuil de -5°C. Comme à 0h15 la température du moteur est inférieure à -5°C, le moteur est redémarré pendant 10 minutes puis l'ECM retourne dans l'état de veille.

Ce redémarrage permet d'augmenter la température du moteur, de sorte qu'au cycle suivant, à 2h15, aucun redémarrage moteur n'est effectué.

A 4h15, la température moteur est repassé en deçà de -5°C et le moteur est redémarré.

A 6h15, le démarrage dit de confort est effectué, et ce même si la température du moteur est supérieure à -5°C.

En variante, on pourrait prévoir une durée plus courte entre deux réveils en vue d'éventuels démarrages de secours, et/ou un seuil THR plus faible. Par exemple, on pourrait prévoir de réveiller l'ECM toutes les 30 minutes et de n'autoriser le démarrage de secours que si la température mesurée est inférieure à -20°C.

## Revendications

1. Procédé de gestion du réchauffage d'un moteur à combustion de véhicule automobile en vue de la prévention du figeage de l'huile de ce moteur, comprenant les étapes suivantes :
- stocker (18, 19) dans une mémoire des données de programmation de réchauffage moteur,
- si ces données correspondent à une série d'ordres de démarrage du moteur à une série d'heures de démarrages respectives ({t(i)}_{i=1,...,4}) comprises dans une plage de durée donnée, pour au moins une heure de démarrage de cette série, lorsque l'heure courante atteint l'heure de démarrage, recevoir (29) une valeur de température courante mesurée (T), et
o si la valeur de température reçue est inférieure à un seuil (THR), autoriser le démarrage (23), et
o si la valeur de température reçue est supérieure à ce seuil, interdire le démarrage.

2. Procédé selon la revendication 1, dans lequel les données de programmation comprennent une heure de début de mission (t_{f}),
**caractérisé en ce que**
si l'heure courante est proche de l'heure de début de mission, le démarrage est autorisé (23) quelle que soit la valeur de température mesurée (T).

3. Procédé selon l'une quelconque des revendications 1 ou 2, dans lequel le seuil de température (THR) est choisi entre -15°C et 0°C.

4. Procédé selon l'une quelconque des revendications 1 à 3, dans lequel la valeur de température reçue (T) est une valeur de température mesurée dans le moteur.

5. Procédé selon la revendication 4, dans lequel la valeur de température reçue (T) est une valeur de température d'un liquide de refroidissement du moteur.

6. Procédé selon la revendication 4, dans lequel la valeur de température reçue (T) est une valeur de température d'air dans l'admission du moteur.

7. Procédé selon l'une quelconque des revendications 1 à 6, dans lequel la plage de durée donnée a une durée inférieure ou égale à 12 heures.

8. Dispositif de gestion (4) du réchauffage d'un moteur à combustion d'un véhicule automobile (1), ce dispositif comprenant
une mémoire (5) agencée pour stocker des données de programmation de réchauffage moteur, et
des moyens de traitement (4) en communication avec la mémoire et agencés pour, si ces données stockées correspondent à une série d'heures de démarrage respectives comprises dans une plage de durée donnée, pour au moins une heure de démarrage de cette série, lorsque l'heure courante atteint l'heure de démarrage, recevoir une valeur de température courante mesurée, si la valeur de température est inférieure à un seuil, autoriser le démarrage, et si la valeur de température est supérieure à un seuil, interdire le démarrage.

9. Véhicule automobile (1) comprenant un dispositif de gestion selon la revendication 8 et un moteur à combustion (2).

10. Produit programme d'ordinateur comprenant des instructions pour effectuer les étapes du procédé selon l'une quelconque des revendications 1 à 7 lorsque lesdites instructions sont exécutées par un dispositif de gestion du chauffage selon la revendication 8.

## Patentansprüche

1. Verwaltungsverfahren des Vorwärmens eines Verbrennungsmotors eines Kraftfahrzeugs zum Verhindern des Erstarrens des Öls dieses Motors, das die folgenden Schritte enthält:
- Speichern (18, 19) von Programmierdaten einer Motorvorwärmung in einem Speicher,
- wenn diese Daten einer Reihe von Startbefehlen des Motors in einer Reihe von Startzeiten ({t(i)}_{i=1,...,4}) entsprechen, die in einem Bereich gegebener Dauer enthalten sind, für mindestens eine Startzeit dieser Reihe, wenn die aktuelle Zeit die Startzeit erreicht, Empfangen (29) eines gemessenen aktuellen Temperaturwerts (T), und
o wenn der empfangene Temperaturwert niedriger ist als eine Schwelle (THR), den Start (23) zu erlauben, und
o wenn der empfangene Temperaturwert höher ist als diese Schwelle, den Start zu verhindern.

2. Verfahren nach Anspruch 1, wobei die Programmierdaten eine Einsatzbeginnzeit (t_{f}) enthalten,
**dadurch gekennzeichnet, dass**, wenn die aktuelle Zeit nahe der Einsatzbeginnzeit ist, der Start erlaubt wird (23), unabhängig vom gemessenen Temperaturwert (T) .

3. Verfahren nach einem der Ansprüche 1 oder 2, wobei die Temperaturschwelle (THR) zwischen -15°C und 0°C gewählt wird.

4. Verfahren nach einem der Ansprüche 1 bis 3, wobei der empfangene Temperaturwert (T) ein im Motor gemessener Temperaturwert ist.

5. Verfahren nach Anspruch 4, wobei der empfangene Temperaturwert (T) ein Temperaturwert einer Kühlflüssigkeit des Motors ist.

6. Verfahren nach Anspruch 4, wobei der empfangene Temperaturwert (T) ein Lufttemperaturwert im Ansaugrohr des Motors ist.

7. Verfahren nach einem der Ansprüche 1 bis 6, wobei der Bereich gegebener Dauer eine Dauer geringer als oder gleich 12 Stunden hat.

8. Verwaltungsvorrichtung (4) der Vorwärmung eines Verbrennungsmotors eines Kraftfahrzeugs (1), wobei diese Vorrichtung enthält
einen Speicher (5), der eingerichtet ist, um Programmierdaten der Motorvorwärmung zu speichern, und
Verarbeitungseinrichtungen (4) in Verbindung mit dem Speicher und eingerichtet, um, wenn diese gespeicherten Daten einer Reihe von Startzeiten entsprechen, die in einem Bereich gegebener Dauer enthalten sind, für mindestens eine Startzeit dieser Reihe, wenn die aktuelle Zeit die Startzeit erreicht, einen gemessenen aktuellen Temperaturwert zu empfangen, wenn der Temperaturwert niedriger ist als eine Schwelle, den Start zu erlauben, und wenn der Temperaturwert höher ist als eine Schwelle, den Start zu verhindern.

9. Kraftfahrzeug (1), das eine Verwaltungsvorrichtung nach Anspruch 8 und einen Verbrennungsmotor (2) enthält.

10. Computerprogrammprodukt, das Anweisungen enthält, um die Schritte des Verfahrens nach einem der Ansprüche 1 bis 7 auszuführen, wenn die Anweisungen von einer Verwaltungsvorrichtung der Erwärmung nach Anspruch 8 ausgeführt werden.

## Claims

1. Method for managing the warming of a motor-vehicle combustion engine that prevents the solidification of the oil in said engine, comprising the following steps:
- storing (18, 19) engine warming scheduling data in a memory,
- if these data correspond to a series of instructions to start the engine at a series of respective start times ({t(i)}ᵢ₌₁, ... ,₄) within a given duration range, for at least one start-up time in said series, when the current time reaches the start-up time, receiving (29) a measured current temperature value (T), and
• authorizing the start-up (23) if the received temperature value is less than a threshold (THR), and
• prohibiting the start-up if the received temperature value is greater than said threshold.

2. Method according to Claim 1, in which the scheduling data include a mission start time (t_{f}),
**characterized in that**
if the current time is close to the mission start time, the start-up is authorized (23) regardless of the temperature value measured (T).

3. Method according to either one of Claims 1 and 2, wherein the temperature threshold (THR) is set between - 15°C and 0°C.

4. Method according to any one of Claims 1 to 3, wherein the received temperature value (T) is a temperature value measured in the engine.

5. Method according to Claim 4, wherein the received temperature value (T) is a temperature value of a coolant liquid in the engine.

6. Method according to Claim 4, wherein the received temperature value (T) is an air temperature value at the intake of the engine.

7. Method according to any one of Claims 1 to 6, wherein the given duration range lasts for up to 12 hours.

8. Device (4) for managing the warming of a combustion engine of a motor vehicle (1), said device comprising a memory (5) designed to store engine warming scheduling data, and
processing means (4) in communication with the memory that are designed, if said stored data represent a series of respective start times within a given duration range, for at least one start-up time in said series, when the current time reaches the start-up time, to receive a measured current temperature value, authorizing the start-up if the temperature value is less than a threshold, and prohibiting the start-up if the temperature value is greater than a threshold.

9. Motor vehicle (1) including a management device according to Claim 8 and a combustion engine (2).

10. Computer program product containing instructions required to carry out the steps of the method according to any one of Claims 1 to 7 in which said instructions are executed by a warming management device according to Claim 8.
